# EUROPEAN PATENT APPLICATION

(11) **EP 2 760 099 A1**
(43) Date of publication of application: **30.07.2014**
(21) Application number: 12834456.1
(22) Date of filing: 21.08.2012
(51) Int. Cl.: H02J 3/32, H02J 13/00

(54) **ELECTRIC POWER CONDITIONING DEVICE AND METHOD FOR CONDITIONING ELECTRIC POWER**

(30) Priority: 22.09.2011 JP 2011206926
(71) Applicant: Panasonic Corporation, Osaka 571-8501 (JP)
(72) Inventor: IKEDA, Tosihisa, Osaka-shi, Osaka 540-6207 (JP); TOYOTA, Hiromi, Osaka-shi, Osaka 540-6207 (JP); KOUDA, Tetsuya, Osaka-shi, Osaka 540-6207 (JP); TSUJIMURA, Satoshi, Osaka-shi, Osaka 540-6207 (JP); KURIMOTO, Kazunori, Osaka-shi, Osaka 540-6207 (JP); KUDOH, Takahiro, Osaka-shi, Osaka 540-6207 (JP); KAJI, Mitsuru, Osaka-shi, Osaka 540-6207 (JP); KINJO, Tatsuto, Osaka-shi, Osaka 540-6207 (JP)
(74) Representative: Appelt, Christian W.
(86) International application number: PCT/JP2012/005218
(87) International publication number: WO 2013/042308

(57) **Abstract**

The electric power conditioning device, connected to an apparatus and an electric storage device in a house, comprises an electric power receiving section, a communication section and an operation section. The electric power receiving section, connected to a commercial power supply, acquires a total electric power consumption amount of the commercial power supply. The operation section makes comparison as to whether an integrated value obtained by integrating the total electric power consumption amount and an electric power consumption amount which is an amount of electric power expected to be consumed when the apparatus is operated exceeds a predetermined value. When the integrated value does not exceed, the operation section transmits a use permission signal to the apparatus via the communication section. When the integrated value exceeds, the electric power conditioning device transmits to the electric storage device a supply electric power inquiring signal via the communication section.

## Description

### Technical Field

The present invention relates to an electric power conditioning device and a method for conditioning electric power.

### Background Art

Electric power conditioning devices of this kind have hitherto been inquired as to whether or not activation of an apparatus connected to an adaptor is possible when activation operation of the apparatus is about to be performed, to control activation of the apparatus connected to the adaptor in accordance with a result of the inquiry. Further, the electric power conditioning devices have issued electric power control instructions (such as instructions to control electric power consumption) to an apparatus with lower priority than the apparatus, having made the inquiry, as necessary in accordance with a content of the inquiry and a permissible value of electric power.

However, in the conventional structure, there has not been performed apparatus activation control as to whether or not the apparatus may be activated while an electric storage device exists in a house to compensate shortage of commercial electric power and a consumption period (predetermined period) of the apparatus as well as an electric power consumption value thereof is considered. The conventional electric power conditioning devices thus have a problem of not being able to deal with a situation of diffusion of electric storage devices in houses.

### Prior Art Documents

### Patent Documents

Patent Document 1: WO 02/13351 A1

### Summary of Invention

An electric power conditioning device of the present invention is connected to an apparatus and an electric storage device installed in a house, and provided with an electric power receiving section, a communication section and an operation section. The electric power receiving section is connected to a commercial power supply, to acquire an electric power consumption amount of the commercial power supply. The communication section receives information from the apparatus that the apparatus is about to be activated. The operation section calculates a first integrated value from an electric power consumption amount of the commercial power supply and an amount of electric power that is generated by activating the apparatus. The communication section transmits to the apparatus a use permission signal for permitting the use of the apparatus when the first integrated value is not larger than a predetermined value, and the communication section transmits to the electric storage device a supply electric power amount inquiry signal for inquiring information regarding an amount of electric power suppliable by the electric storage device when the first integrated value is larger than a predetermined value.

Accordingly, it is possible to perform apparatus activation control as to whether or not an apparatus may be activated while an electric storage device existing in a house compensates shortage of commercial electric power and an electric power consumption value of the apparatus is considered.

### Brief Description of Drawings

Fig. 1 is an overview diagram of an electric power control system in a first embodiment of the present invention;
Fig. 2 is a constitutional diagram of an electric power conditioning device in the first embodiment of the present invention;
Fig. 3 is a constitutional diagram of an electric storage device in the first embodiment of the present invention;
Fig. 4 is a constitutional diagram of an apparatus in the first embodiment of the present invention; and
Fig. 5 is a processing flow diagram of electric power conditioning in the first embodiment of the present invention.

### Description of Embodiment

Hereinafter, embodiments of the present invention will be described with reference to the drawings. It is to be noted that the present invention is not restricted by these embodiments.

### (First Embodiment)

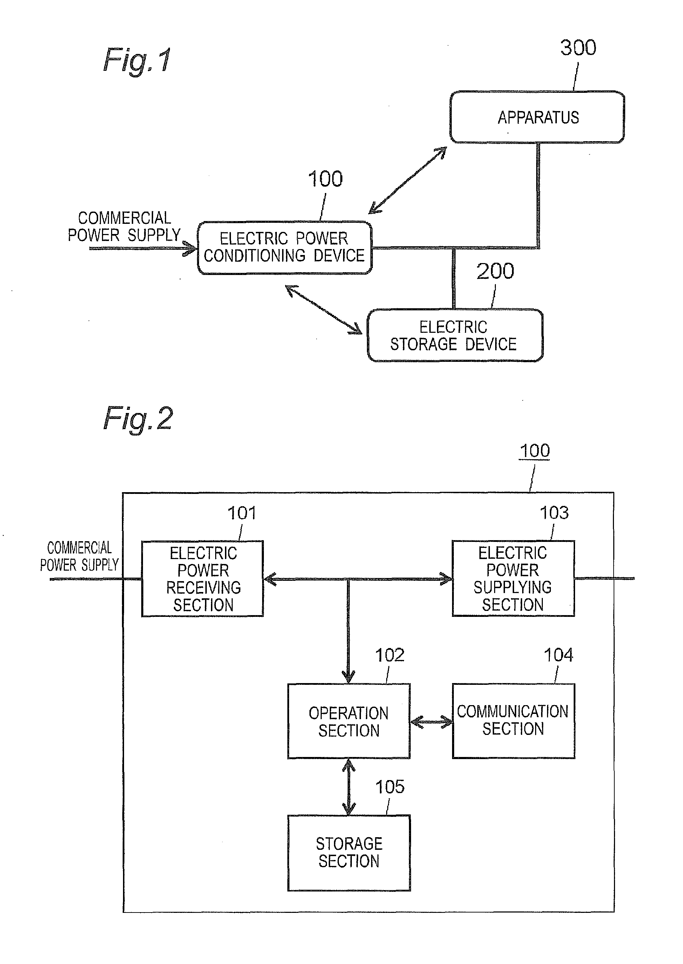

Fig. 1 is a constitutional diagram of an electric power control system in the first embodiment of the present invention. An electric power control system is configured of an electric power conditioning device 100 for supplying a commercial power supply to each apparatus in a house, and an electric storage device 200 and an apparatus 300 which are electrically connected to the electric power conditioning device 100.

By means of wired communication such as Ethernet (registered trade mark) LAN or wireless communication such as wireless LAN, bidirectional communication is possible between the electric power conditioning device 100 and the electric storage device 200 or between the electric power conditioning device 100 and the apparatus 300.

The electric power conditioning device 100 has the function of measuring electric charge into the electric storage device 200, electric discharge from the electric storage device 200, the timing for performing those and an amount of electricity stored in the electric storage device 200, and the function of monitoring an amount of electric power so as not to exceed a limit value of electric power supplied by the electric storage device 200 (electric storage device supply upper limit).

It is to be noted that, although only one apparatus is installed in the electric power control system of Fig. 1, there is no limit on the number of installed apparatuses, and two or more apparatus may be installed. Further, the electric power control system may include an electric power generating device such as a solar power generator or a fuel cell. The present electric power control system can be configured so long as including an apparatus that consumes electric power, an apparatus that stores electric power, an apparatus that generates electric power and an apparatus that adjusts those apparatuses. For this reason, this is not restricted to electric power control in a house, but also applicable to electric power control in a building and electric power control in a region.

It is to be noted that the electric storage device 200 may be charged from the commercial power supply, or from a solar power generator (solar panel), a wind power generator, or the like. It is considered that, especially one whose generated electricity amount is influenced by the weather, such as the solar power generator or the wind power generator, can be used in such a manner as to charge a charging device when extra electric power is generated, and thereby a large effect can be expected.

Fig. 2 is a constitutional diagram of an electric power conditioning device in the first embodiment of the present invention. As shown in Fig. 2, the electric power conditioning device 100 is provided with an electric power receiving section 101, an operation section 102, an electric power supplying section 103, a communication section 104, and a storage section 105.

The electric power receiving section 101 receives a commercial power supply which is provided into a house from the outside such as an electric power company, while detecting an electric power amount consumed in the house (electric power consumption amount), and monitors and controls the electric power consumption amount so as not to exceed a limit value of electric power suppliable from the commercial power supply (commercial power supply upper limit).

The operation section 102 calculates a total electric power consumption amount from an amount of electric power consumed by the apparatus and an amount of electric power consumed throughout the house.

The electric power supplying section 103 provides the commercial power supply to the entire house including the apparatus.

The communication section 104 communicates bidirectionally with a communication section provided in each of the electric storage device 200 and the apparatus 300. The communication section 104 may use wired communication such as Ethernet (registered trade mark) LAN or power line communication (PLC), or wireless communication such as wireless LAN, ZigBee (registered trade mark) or a specific low electric power radio.

The storage section 105 can store a variety of information, and for example, it can store an electric power consumption amount of the apparatus 300, to find an estimated value of an amount of electric power to be consumed by the apparatus 300.

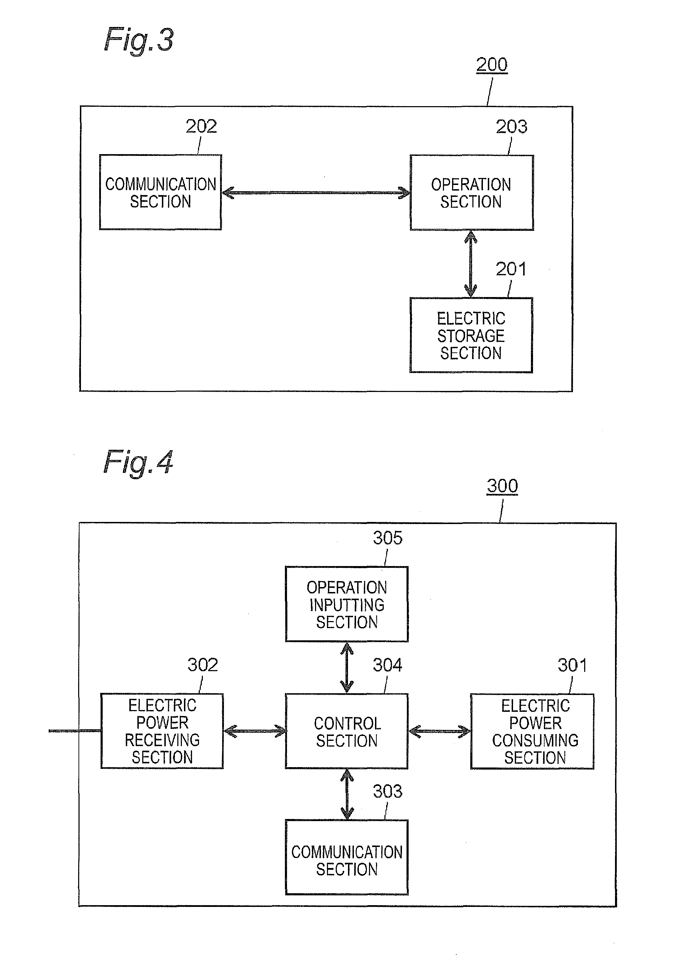

Fig. 3 is a constitutional diagram of the electric storage device 200 in the first embodiment of the present invention. As shown in Fig. 3, the electric storage device 200 is configured of an electric storage section 201, a communication section 202 and an operation section 203.

The electric storage section 201 stores electricity supplied from the commercial power supply, the solar power generator (not shown) or the like.

The communication section 202 communicates bidirectionally with a communication section provided in each of the electric power conditioning device 100 and the apparatus 300. Similarly to the communication section 104 (Fig. 2) of the electric power conditioning device 100, the communication section 202 can use wired communication such as power line communication (PLC), or wireless communication such as Wi-Fi (registered trade mark), ZigBee (registered trade mark) or a specific low electric power radio.

As described later, with reference to an amount of electricity stored in the electric storage section 201, the operation section 203 calculates an amount of electric power stably (almost regularly) suppliable within a predetermined period.

Fig. 4 is a constitutional diagram of the apparatus in the first embodiment of the present invention. As shown in Fig. 4, the apparatus 300 is configured of an electric power consuming section 301, an electric power receiving section 302, a communication section 303, a control section 304 and an operation inputting section 305.

The electric power consuming section 301 is a means for converting electric power supplied from the electric power receiving section 302 to work. For example, when the apparatus 300 is a heater, it is a means for converting electricity to thermal energy, and when the apparatus 300 is an air conditioner, it is a means for converting a hot air to a cold air through use of coolant or converting oppositely.

The electric power receiving section 302 receives electric power supplied from the electric power supplying section 103 of the electric power conditioning device 100.

The communication section 303 communicates bidirectionally with the communication section 104 (Fig. 2) of the electric power conditioning device 100 and the communication section 202 (Fig. 3) of the electric storage device 200. Similarly to the communication section 104 and the communication section 202, the communication section 303 can use wired communication such as power line communication (PLC), or wireless communication such as Wi-Fi (registered trade mark), ZigBee (registered trade mark) or a specific low electric power radio.

The operation inputting section 305 is specifically a switch that turns on and off a power source. Alternatively, the operation inputting section 305 is not a simple ON/OFF switch, but is an operation panel to perform setting regarding operation, such as conditioning of a temperature and setting of an operation mode. These switch and operation panel are realized in a button form. Alternatively, the functions of the switch and operation panel can be realized by wireless instruction from a wireless remote controller attached to the apparatus 300.

The control section 304 adjusts the electric power consuming section 301 in accordance with an operation request made by the user via the operation inputting section 305 or a peripheral environment such as a temperature or humidity. Further, when the switch is turned on by the operation inputting section 305, the control section 304 creates information indicative thereof, and transmits it to the electric power conditioning device 100 via the communication section 303.

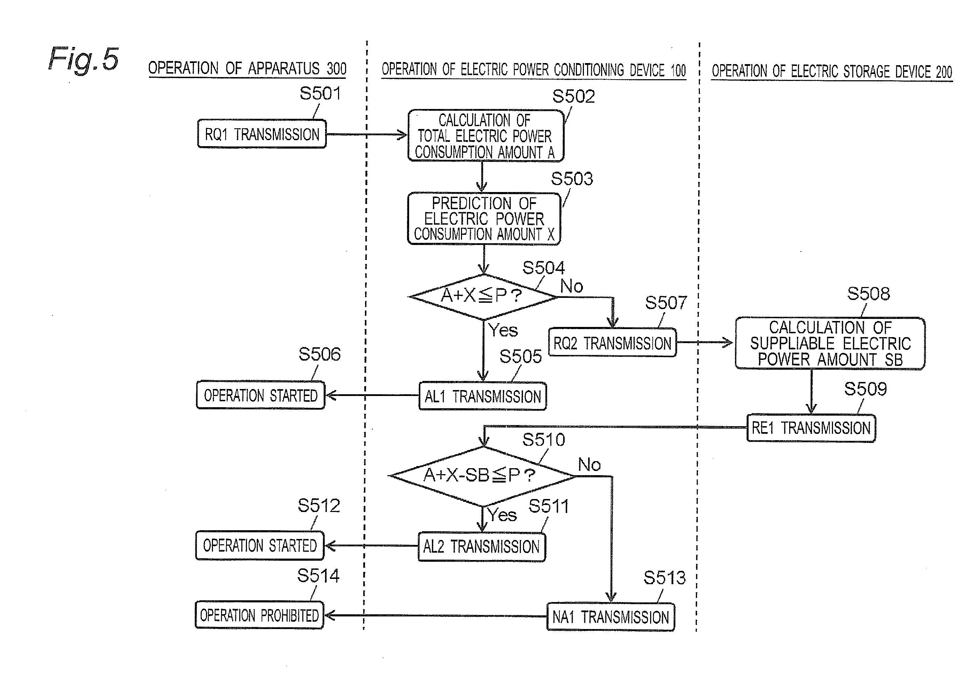

Fig. 5 is a processing flow diagram of electric power conditioning in the first embodiment of the present invention. Fig. 5 shows a sequence indicative of communication among the apparatus 300, the electric storage device 200 and the electric power conditioning device 100 when the power source of the apparatus 300 is turned on by a user. Hereinafter, processing performed by the electric power conditioning device 100, the electric storage device 200 and the apparatus 300 will be sequentially described using Fig. 5.

First, when the user is about to turn on the power source of the apparatus 300 via the operation inputting section 305, the apparatus 300 transmits a request signal (signal RQ1) to the electric power conditioning device 100 via the communication section 303 (Step S501). The signal RQ1 can be any signal, regardless of a content and a format thereof, so long as the signal can make it recognizable in the electric power conditioning device 100 that the power source of the apparatus 300 has been about to be turned on.

When the electric power conditioning device 100 receives the signal RQ1, the operation section 102 calculates a total electric power consumption amount A as amounts of all electric power being supplied via the electric power supplying section 103 (Step S502). It is to be noted that calculation of the total electric power consumption amount A by the operation section 102 can be realized by a method for integrating the amounts of all the electric power being supplied via the electric power supplying section 103. Naturally, this method is not restrictive, and when the communication section is provided in each of all apparatuses in the house and bidirectional communication is possible by wired or wireless communication, electric power consumption amounts of all appliances may be collected from all the apparatuses and then integrated.

Subsequently, the operation section 102 predicts an electric power consumption amount (hereinafter referred to as electric power amount X) which is an amount of electric power expected to be consumed when the power source of the apparatus 300 is turned on and the apparatus 300 is operated (Step S503), and makes comparison as to whether or not a first integrated value (A+X) obtained by integrating the electric power amount X to the total electric power consumption amount A exceeds a predetermined value P (calculated as suppliable electric power value, for example, from a capacity of a circuit breaker) (Step S504). By setting the predetermined value P to 90% of the electric power supply upper limit, for example, when the power source of the apparatus 300 is turned on and the apparatus 300 is operated, it is possible to avoid the first integrated value exceeding the electric power supply upper limit and a circuit breaker cutting off electric power.

In Step S504, when the first integrated value (A+X) is not larger than the predetermined value P (Yes in Step S504), the operation section 102 transmits a signal AL1 to the apparatus 300 via the communication section 104 (Step S505), and the apparatus 300 having received the signal AL1 starts operation (Step S506). The signal AL1 can be any signal, regardless of a content and a format thereof, so long as the signal can make it recognizable in the apparatus 300 that turning-on of the power source of the apparatus 300 has been permitted.

Further, when the first integrated value (A+X) is larger than the predetermined value P in Step S504 (No in Step S504), the electric power conditioning device 100 transmits to the electric storage device 200 a request signal (signal RQ2) including a supply electric power inquiring signal as information regarding a suppliable amount of electric power via the communication section 104 (Step S507). The signal RQ2 can be any signal, regardless of a content and a format thereof, so long as the signal can make it recognizable on the electric storage device 200 side that it prompts start of operation in Step S508 described below. As for the suppliable electric power value, for example, electric power suppliable by the electric storage device 200 and how long the electric power is suppliable can be calculated from characteristics of the electric storage device 200 and an electric storage amount at that time point.

When the electric storage device 200 receives the signal RQ2 via the communication section 202, the operation section 203 calculates a suppliable electric power amount (hereinafter referred to as an SB value) which is an amount of electric power suppliable in a previously set predetermined period (e.g., 10 minutes) (Step S508). Then, the electric storage device 200 transmits a return signal (signal RE1) including the SB value to the electric power conditioning device 100 via the communication section 202 (Step S509).

When the electric power conditioning device 100 having received the signal RE1 via the communication section 104 extracts the SB value, it makes comparison as to whether or not a second integrated value (A+X-SB) obtained by subtracting the SB value from the first integrated value (A+X), obtained by adding the electric power amount X to the total electric power consumption amount A calculated in Step S502, exceeds the predetermined value P (suppliable electric power value) (Step S510).

In Step S510, when the second integrated value (A+X-SB) is not larger than the predetermined value P (Yes in Step S510), the operation section 102 determines the apparatus 300 as usable and transmits a signal AL2 to the apparatus 300 via the communication section 104 (Step S511), and the apparatus 300 having received the signal AL2 starts operation (Step S512). The signal AL2 can be any signal, regardless of a content and a format thereof, so long as the signal can make it recognizable in the apparatus 300 that turning-on of the power source of the apparatus 300 has been permitted.

On the other hand, when the second integrated value (A+X-SB) is larger than the predetermined value P in Step S510 (No in Step S510), the operation section 102 determines the apparatus 300 as unusable and transmits a signal NA1 to the apparatus 300 via the communication section 104 (Step S513), and the apparatus 300 having received the signal NA1 controls the control section 304 so as not to start operation (Step S514) . The signal NA1 can be any signal, regardless of a content and a format thereof, so long as the signal can make it recognizable in the apparatus 300 that turning-on of the power source of the apparatus 300 has not been permitted, namely forbidden. It is to be noted that, although the operation section 102 compares the second integrated value (A+X-SB) with the predetermined value P to determine whether or not the apparatus 300 is usable in Step S510, the determination method is not restricted to this. For example, the operation section 102 may compare the first integrated value (A+X) with a third integrated value (P+SB) obtained by integrating the predetermined value P and the SB value, to determine whether or not the apparatus 300 is usable based on a result of the comparison. That is, the operation section 102 may determine the apparatus 300 as usable when the first integrated value is not larger than the third integrated value, and may determine the apparatus 300 as unusable when the first integrated value is larger than the third integrated value.

Hereinafter, a method for predicting the electric power amount X in Step S503 will be described in detail. The electric power conditioning device 100 can specify an apparatus having transmitted the signal RQ1 by receiving the signal RQ1. Accordingly, a table where an electric power consumption amount is set with respect to each apparatus is previously stored into the storage section 105, and then, the electric power amount X can be obtained. Especially by making information, which allows specification of an operation mode of the apparatus 300, included in the signal RQ1 when the apparatus 300 transmits the signal RQ1, the operation section 102 can find the electric power amount X with higher accuracy. As for the above operation mode, for example, when the apparatus 300 is an air conditioner, the operation modes include a cooling mode, a dry mode, a heating mode and the like, and each of the modes includes high, middle and low setting and some other setting)

As another method, when the apparatus 300 transmits the signal RQ1, an estimated value of the electric power consumption amount is included in the signal RQ1. The operation mode is accepted when the user turns on the power source of the apparatus 300 via the operation inputting section 305. Then, by having been previously stored the table where the electric power consumption amount corresponds to the operation mode into a storage section (not shown), the apparatus 300 can find electric power amount X corresponding to the operation mode. Then, the apparatus 300 transmits the signal RQ1 with the electric power amount X included therein.

Although the amount (SB value) of electric power suppliable in the predetermined period (e.g. 10 minutes) has been calculated in Step S508, the electric power conditioning device 100 may include into this signal RQ2 a predetermined period inquiry signal for inquiring this predetermined period. Further, the predetermined period can be freely specified by the electric power conditioning device 100 including information for specifying this predetermined period into the signal RQ2. When the information for specifying the predetermined period is included in the signal RQ2, the operation section 203 of the electric storage device 200 calculates the amount (SB value) of electric power suppliable in the specified predetermined period.

Further, the apparatus 300 can also freely specify the predetermined period to be included in the signal RQ2. In order to realize this, information for specifying the predetermined period is previously included into the signal RQ1 that is transmitted in Step S501. Further, the signal RQ2 that is transmitted by the electric power conditioning device 100 in Step S508 may be transmitted while including the information for specifying the predetermined period which has been included in the signal RQ1.

As described above, an electric power conditioning device of the present invention is connected to an apparatus and an electric storage device installed in a house, and provided with an electric power receiving section, a communication section and an operation section. The electric power receiving section is connected to a commercial power supply, to acquire an electric power consumption amount of the commercial power supply. The communication section receives information from the apparatus that the apparatus is about to be activated. The operation section calculates a first integrated value from an electric power consumption amount of the commercial power supply and an amount of electric power that is generated by activating the apparatus. The communication section transmits to the apparatus a use permission signal for permitting the use of the apparatus when the first integrated value is not larger than a predetermined value, and the communication section transmits to the electric storage device a supply electric power amount inquiry signal for inquiring information regarding an amount of electric power suppliable by the electric storage device when the first integrated value is larger than a predetermined value.

Accordingly, it is possible to perform apparatus activation control as to whether or not an apparatus may be activated while an electric storage device exists in a house to compensate shortage of commercial electric power and an electric power consumption value of the apparatus is considered.

Further, in the electric power conditioning device of the present invention, the information regarding the amount of electric power suppliable by the electric storage device includes an amount of electric power suppliable in a predetermined period.

Accordingly, it is possible to perform apparatus activation control as to whether or not the apparatus may be activated while the electric storage device exists in the house to compensate shortage of the commercial electric power and the consumption period (predetermined period) of the apparatus as well as the electric power consumption value thereof is considered.

Further, in the electric power conditioning device of the present invention, the communication section transmits a predetermined period inquiry signal for inquiring the predetermined period while transmitting the supply electric power amount inquiry signal.

Accordingly, it is possible to perform apparatus activation control as to whether or not the apparatus may be activated while the electric storage device exists in the house to compensate shortage of the commercial electric power and the consumption period (predetermined period) of the apparatus as well as the electric power consumption value thereof is considered.

Further, in the electric power conditioning device of the present invention, the information regarding the predetermined period includes a value specified by the apparatus.

Accordingly, it is possible to perform apparatus activation control as to whether or not the apparatus may be activated while the electric storage device exists in the house to compensate shortage of the commercial electric power and the consumption period (predetermined period) of the apparatus as well as the electric power consumption value thereof is considered in accordance with each of a variety of apparatuses.

Further, in the electric power conditioning device of the present invention, when the communication section receives the information regarding the suppliable electric power amount after transmitting the supply electric power amount inquiry signal to the electric storage device, the operation section calculates the first integrated value and the amount of electric power suppliable by the electric storage device, thereby to determine whether or not the apparatus is usable. The communication section transmits the use permission signal to the apparatus when the operation section determines the apparatus as usable, and the communication section transmits a use prohibition signal to the apparatus when the operation section determines the apparatus as unusable.

Accordingly, it is possible to perform apparatus activation control as to whether or not the apparatus may be activated while the electric storage device exists in the house to compensate shortage of the commercial electric power and the consumption period (predetermined period) of the apparatus as well as the electric power consumption value thereof is considered in accordance with each of a variety of apparatuses.

Further, in the electric power conditioning device of the present invention, the operation section calculates a second integrated value by subtracting the amount of electric power suppliable by the electric storage device from the first integrated value. The operation section determines the apparatus as usable when the second integrated value is not larger than the predetermined value, and the operation section determines the apparatus as unusable when the second integrated value is larger than the predetermined value.

Accordingly, it is possible to determine, by simple calculation, whether or not the apparatus may be activated while the electric storage device exists in the house to compensate shortage of the commercial electric power and the consumption period (predetermined period) of the apparatus as well as the electric power consumption value thereof is considered in accordance with each of a variety of apparatuses.

A method for conditioning electric power according to the present invention is a method for conditioning electric power in an electric power conditioning device which is connected to a commercial power supply to acquire an electric power consumption amount of the commercial power supply, while communicating with an apparatus and an electric storage device installed in a house to adjust whether or not the apparatus is usable. The method includes the steps of: receiving information that the apparatus is about to be activated; calculating an integrated value from an electric power consumption amount of the commercial power supply and an amount of electric power that is generated by activating the apparatus; and transmitting a use permission signal to the apparatus in the case of the integrated value being not larger than a predetermined value, and transmitting to the electric storage device a supply electric power amount inquiry signal for inquiring information regarding an amount of electric power suppliable by the electric storage device in the case of the integrated value being larger than the predetermined value.

Accordingly, it is possible to perform apparatus activation control as to whether or not the apparatus may be activated while the electric storage device exists in the house to compensate shortage of the commercial electric power and the consumption period (predetermined period) of the apparatus as well as the electric power consumption value thereof is considered in accordance with each of a variety of apparatuses.

### Industrial Applicability

As thus described, an electric power conditioning device according to the present invention is broadly usable in applications for using an apparatus while coordinating the apparatus with an electric storage device in a situation where the electric storage device has been introduced into a house.

### Description of Reference Characters

- 100: electric power conditioning device
- 101, 302: electric power receiving section
- 102, 203: operation section
- 103: electric power supplying section
- 104, 202, 303: communication section
- 105: storage section
- 200: electric storage device
- 201: electric storage section
- 300: apparatus
- 301: electric power consuming section
- 304: control section
- 305: operation inputting section

## Claims

1. An electric power conditioning device which is connected to an apparatus and an electric storage device installed in a house, comprising:
an electric power receiving section;
a communication section; and
an operation section,
wherein
the electric power receiving section is connected to a commercial power supply to acquire an electric power consumption amount of the commercial power supply,
the communication section receives information from the apparatus that the apparatus is about to be activated,
the operation section calculates a first integrated value from an electric power consumption amount of the commercial power supply and an amount of electric power that is generated by activating the apparatus, and
the communication section transmits to the apparatus a use permission signal for permitting the use of the apparatus when the first integrated value is not larger than a predetermined value, and the communication section transmits to the electric storage device a supply electric power amount inquiry signal for inquiring information regarding an amount of electric power suppliable by the electric storage device when the first integrated value is larger than a predetermined value.

2. The electric power conditioning device according to claim 1, wherein the information regarding the amount of electric power suppliable by the electric storage device includes an amount of electric power suppliable in a predetermined period.

3. The electric power conditioning device according to claim 2, wherein the communication section transmits a predetermined period inquiry signal for inquiring the predetermined period while transmitting the supply electric power amount inquiry signal.

4. The electric power conditioning device according to claim 2, wherein the information regarding the predetermined period includes a value specified by the apparatus.

5. The electric power conditioning device according to claim 1, wherein
when the communication section receives the information regarding the suppliable electric power amount after transmitting the supply electric power amount inquiry signal to the electric storage device, the operation section calculates the first integrated value and the amount of electric power suppliable by the electric storage device, thereby to determine whether or not the apparatus is usable, and
the communication section transmits the use permission signal to the apparatus when the operation section determines the apparatus as usable, and the communication section transmits a use prohibition signal to the apparatus when the operation section determines the apparatus as unusable.

6. The electric power conditioning device according to claim 5, wherein
the operation section calculates a second integrated value by subtracting the amount of electric power suppliable by the electric storage device from the first integrated value, and
the operation section determines the apparatus as usable when the second integrated value is not larger than the predetermined value, and the operation section determines the apparatus as unusable when the second integrated value is larger than the predetermined value.

7. A method for conditioning electric power in an electric power conditioning device which is connected to a commercial power supply to acquire an electric power consumption amount of the commercial power supply, while communicating with an apparatus and an electric storage device installed in a house to adjust whether or not the apparatus is usable, comprising:
receiving information that the apparatus is about to be activated;
calculating an integrated value from an electric power consumption amount of the commercial power supply and an amount of electric power that is generated by activating the apparatus; and
transmitting a use permission signal to the apparatus in the case of the integrated value being not larger than a predetermined value, and transmitting to the electric storage device a supply electric power amount inquiry signal for inquiring information regarding an amount of electric power suppliable by the electric storage device in the case of the integrated value being larger than the predetermined value.
